# FASCICULE DE BREVET EUROPEEN

(11) **EP 0 918 612 B1**
(45) Date de publication et mention de la délivrance du brevet: **25.09.2002**
(21) Numéro de dépôt: 97932892.9
(22) Date de dépôt: 10.07.1997
(51) Int. Cl.: B29C 45/37, B29C 33/42

(54) **DISPOSITIF DE MARQUAGE POUR MOULE**
MARKIERVORRICHTUNG FÜR EIN FORMWERKZEUG
MARKING DEVICE FOR A MOULD

(30) Priorité: 16.07.1996 FR 9609135
(43) Date de publication de la demande: 02.06.1999
(73) Titulaire: Picco, Bernard, 01870 Groissiat (FR); Picco, Patrick, 01100 Oyonnax (FR)
(72) Inventeur: Picco, Bernard, 01870 Groissiat (FR); Picco, Patrick, 01100 Oyonnax (FR)
(74) Mandataire: Maureau, Philippe
(86) Numéro de dépôt international: FR9701269
(87) Numéro de publication internationale: WO98002292

(56) Documents cités:
- EP-A- 0 628 396
- DE-C- 4 415 583
- DE-U- 8 233 634
- DE-U- 9 313 653
- PATENT ABSTRACTS OF JAPAN vol. 012, no. 212 (M-710), 17 juin 1988 & JP 63 013724 A (NEC HOME ELECTRONICS LTD), 21 janvier 1988,

## Description

La présente invention a pour objet un dispositif de marquage pour moule, pour le moulage par injection, ou pressage de pièces en matière synthétique ou de pièces de fonderie sous pression.

Cette invention a rapport au moulage de pièces qui doivent être identifiées, notamment par une date de fabrication. Pour ce faire, un dispositif est positionné dans le moule.

Il existe des inserts comportant plusieurs pièces, mobiles l'une par rapport à l'autre. En modifiant la position relative de deux pièces, il est possible de modifier le marquage à réaliser sur la pièce. Ainsi, par exemple, une première pièce sur laquelle est gravée une flèche et l'indication d'une année peut tourner dans une pièce annulaire portant les nombres 1 à 12. En faisant tourner la pièce placée à l'intérieur, la flèche s'oriente vers l'un ou l'autre des nombres gravés sur la pièce extérieure. Ceci permet d'indiquer le mois de fabrication sur les pièces réalisées dans un moule muni d'un tel dispositif marqueur.

Pour diminuer le coût de revient d'un moule, il existe aussi des dispositifs marqueurs constitués d'une seule pièce positionnée dans le moule. Cette pièce est par exemple une pièce cylindrique placée dans un logement de forme complémentaire. Cette pièce, de section généralement circulaire, est montée avec serrage dans son logement, afin d'empêcher tout mouvement relatif entre le dispositif marqueur et la paroi du moule.

Cependant, ces dispositifs marqueurs portent une mention que le fabricant peut être amené à modifier. Il peut s'agir par exemple de la mention d'une année, ou d'un symbole susceptible de modifications (marque du produit, référence d'un client, etc...).

L'inconvénient de ces dispositifs marqueurs est qu'il est difficile de les changer. Leur démontage n'est pas aisé et entraîne généralement des endommagements empêchant la réutilisation du dispositif marqueur, voire sa destruction. En effet, il n'est pas rare de devoir percer un trou dans le dispositif marqueur pour pouvoir le sortir de son logement.

Ceci nécessite beaucoup de temps. De plus, lorsqu'il y a perçage, des copeaux sont produits, et ceux-ci risquent de se retrouver dans le moule. Enfin, il y a risque d'endommager le moule.

Le document JP 63 013 724 décrit un procédé pour indiquer une date de moulage sur une pièce en matière synthétique dans un moule. Ce procédé consiste à utiliser un moule présentant des dates de moulage ainsi que deux types de vis différents, puis à placer un type de vis prédéterminé en face d'une partie du moule correspondant à la date devant être indiquée.

L'invention a alors pour but de fournir un dispositif marqueur simple, destiné à avoir une position fixe dans un moule, mais qui puisse être facilement démonté et remonté.

A cet effet, elle propose un dispositif de marquage qui comporte :
- une tête destinée à affleurer la face interne de la paroi du moule, la face de la tête orientée vers l'intérieu du moule présentant un marquage et des moyens permettant l'entraînement de la rotation de la tête,
- un corps cylindrique fileté ne formant qu'une seule pièce avec la tête du dispositif.

Ce dispositif de marquage peut être vissé directement dans la paroi intérieure d'un moule, de telle sorte que la tête affleure cette paroi. La paroi du moule présente alors un trou taraudé dont la forme correspond à la forme du dispositif. Pour changer le marquage réalisé sur les pièces fabriquées dans le moule, il suffit de dévisser le dispositif de marquage et de revisser un autre dispositif de marquage, de même forme mais avec le marquage souhaité à sa place.

Si la paroi du moule est déjà équipée d'un logement pour recevoir un dispositif de marquage, il est possible d'introduire dans ce logement une pièce épousant la forme de celui-ci et de réaliser dans cette pièce intermédiaire un trou taraudé permettant de recevoir le dispositif de marquage selon l'invention.

Avantageusement, le dispositif de marquage présente une tête de forme cylindrique circulaire, de diamètre extérieur plus important que le diamètre extérieur du corps. Il est alors possible de réaliser un serrage entre la tête du dispositif de marquage et la paroi du moule, au niveau de la surface périphérique de la tête.

Dans ce dernier cas, de préférence, une partie de forme tronconique relie la tête du dispositif à son corps, de façon à obtenir un meilleur ajustement du dispositif dans son logement.

Dans le cas où la paroi du moule n'est pas munie d'un trou taraudé, mais uniquement d'un logement de forme cylindrique circulaire, le dispositif de marquage comporte en outre une douille taraudée, dont le diamètre extérieur correspond au diamètre extérieur de la tête du dispositif et dont le taraudage correspond au filetage de son corps, de telle sorte que lorsque le corps est vissé dans la douille, l'ensemble ainsi constitué est de forme cylindrique circulaire. Cet ensemble peut alors prendre place dans la paroi du moule. Bien entendu, le diamètre extérieur de la douille et de la tête seront adaptés au diamètre intérieur du logement de la paroi du moule.

Pour les dispositifs de marquage selon l'invention décrits ci-dessus, les moyens permettant l'entraînement en rotation de la tête sont avantageusement une rainure droite passant par le centre de la face orientée vers l'intérieur du moule. Cependant, il peut s'agir de toute autre moyen, tel par exemple un logement cylindrique hexagonal ou une forme carrée en relief.

De toute façon, l'invention sera bien comprise à l'aide de la description qui suit, en référence au dessin schématique annexé, représentant à titre d'exemples non limitatifs deux formes d'exécution d'un dispositif de marquage selon l'invention.
Figure 1 est une vue en perspective éclatée d'un premier dispositif de marquage et d'une partie du moule recevant ce dernier,
Figure 2 est une vue en coupe longitudinale de ce premier dispositif, et
Figure 3 est une vue en coupe, correspondant à la figure 2, d'un second dispositif de marquage.

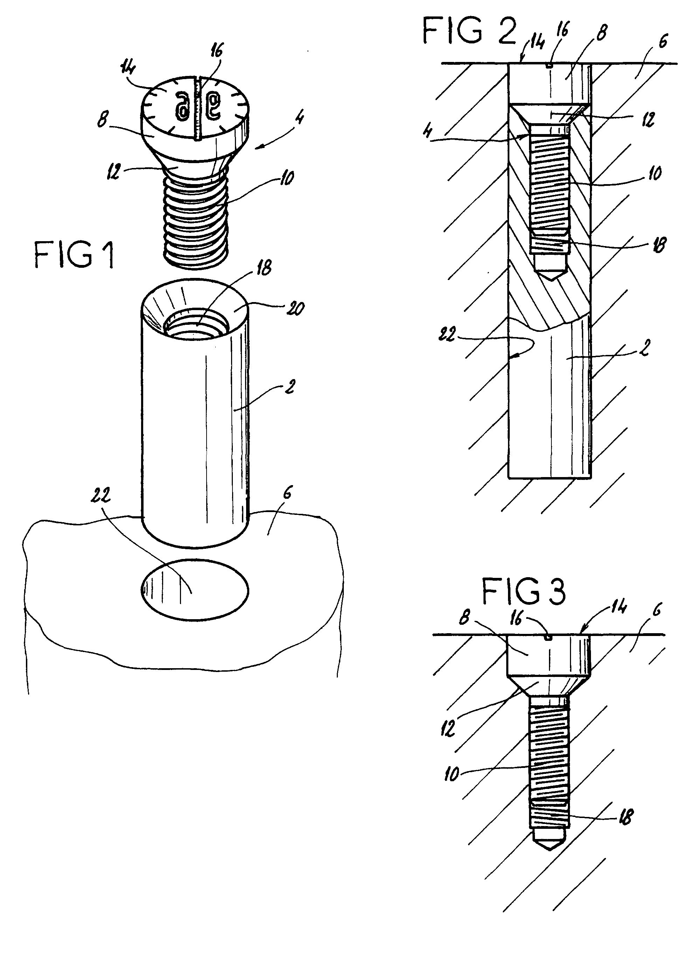

Un dispositif de marquage, constitué de deux pièces, une douille 2 et un insert 4, est représenté en coupe, dans sa position montée dans une paroi de moule 6, sur la figure 2.

L'insert 4 présente une tête 8 et un corps 10 reliés par une zone de liaison 12.

La tête 8 est de forme cylindrique circulaire. Elle présente une face 14 destinée à affleurer la face interne de la paroi du moule 6. Cette face comporte une indication, qui peut être portée en creux ou en relief. Comme suggéré par la figure 1, cette indication peut correspondre à l'année de fabrication des pièces fabriquées dans le moule. Il peut bien entendu s'agir de toute autre indication. Cette face 14 comporte également une rainure 16 s'étendent sur tout un diamètre de la face 14. Cette rainure 16 est destinée à recevoir l'extrémité d'un tournevis (non représenté).

Le corps 10 est également de forme cylindrique circulaire. Le corps 10 et la tête 8 sont co-axiaux. Le corps 10 est fileté sur toute sa longueur. Son diamètre extérieur est inférieur au diamètre extérieur de la tête 8 de l'insert.

La zone de liaison 12 est tronconique. Elle relie, en s'élargissant, le corps 10 à la tête 8 de l'insert.

La douille 2 est de forme cylindrique circulaire. Elle présente un trou taraudé 18. Le taraudage de ce trou correspond au filetage du corps 10 de l'insert. Le diamètre extérieur de la douille 2 est sensiblement égal au diamètre extérieur de la tête 8 de l'insert. Du côté de l'ouverture du trou taraudé 18, la douille présente une surface conique 20 s'étendant depuis le bord libre extérieur de la douille vers l'intérieur. Cette surface conique correspond à la conicité de la zone de liaison 12 de l'insert.

Ainsi, lorsque le corps de l'insert est vissé dans le trou taraudé, la zone de liaison 12 vient reposer contre la surface conique 20. L'ensemble constitué par l'insert 4 et la douille 2 est de forme cylindrique circulaire. La surface périphérique de la tête 8 de l'insert prolonge la surface périphérique de la douille 2 (figure 2).

Cet ensemble formé par la douille 2 et l'insert 4 est destiné à prendre place dans un logement 22 cylindrique circulaire ménagé dans la paroi du moule 6. Cet ensemble est monté avec serrage dans le logement 22. Le serrage permet de maintenir la douille 2 et l'insert 4 en place. Cependant, il est possible de dévisser l'insert 4 de la douille 2. La hauteur de la tête 8 est relativement faible, de telle sorte que le serrage exercé sur la tête 8 n'empêche pas le dévissage de l'insert.

Ainsi, il est facile de changer le marquage sur les pièces fabriquées dans le moule 6. Il suffit de dévisser l'insert 4 en place dans la douille 2 pour le remplacer par un autre insert, de forme identique mais présentant un autre marquage.

La figure 3 représente une variante d'exécution. Dans cette variante, on retrouve le même insert 4 que dans la forme d'exécution décrite ci-dessus. La douille 2 disparaît.

Le logement réalisé dans la paroi du moule est différent. Il ne s'agit plus d'un trou cylindrique circulaire, mais d'un trou étagé dont une partie est taraudée.

En partant de la partie intérieure du moule, le logement présente une partie cylindrique circulaire dont la hauteur et le diamètre correspondent à la hauteur et au diamètre de la tête 8 de l'insert. Puis le logement se rétrécit et présente une surface tronconique correspondant à la zone de liaison 12. Enfin, le fond du logement est taraudé et le taraudage correspond au filetage du corps 10 de l'insert.

Lorsque l'insert 4 est mis en place dans le logement, sa tête 8 affleure la face interne de la paroi du moule. Comme c'est le cas lorsque l'insert est monté dans une douille, la surface conique de liaison permet un bon positionnement de l'insert et un bon ajustement.

Comme il va de soi, l'invention ne se limite pas aux formes d'exécution décrites ci-dessus à titre d'exemples non limitatifs; elle en embrasse au contraire toutes les variantes.

## Revendications

1. Dispositif de marquage pour moule comportant :
- une tête (8) circulaire, destinée à prendre place dans un logement (22) ménagé dans une paroi de moule et de diamètre sensiblement égal au diamètre de la tête (8) et à affleurer la face interne de la paroi du moule (6), la face (14) de la tête orientée vers l'intérieur du moule présentant des moyens (16) permettant l'entraînement de la rotation de la tête, et
- un corps cylindrique fileté (10) ne formant qu'une seule pièce avec la tête (8) du dispositif,
**caractérisé en ce que** la face (14) de la tête orientée vers l'intérieur du moule présente un marquage distinct des moyens d'entraînement (16).

2. Dispositif de marquage selon la revendication 1, **caractérisé en ce que** la tête (8) est de forme cylindrique circulaire, de diamètre extérieur plus important que le diamètre extérieur du corps (10).

3. Disposition de marquage selon la revendication 2, **caractérisé en ce qu'**une partie de forme tronconique (12) relie la tête (8) du dispositif à son corps (10).

4. Dispositif de marquage selon l'une des revendications 2 ou 3, **caractérisé en ce qu'**il comporte en outre une douille (2) taraudée, dont le diamètre extérieur correspond au diamètre extérieur de la tête (8) du dispositif et dont le taraudage correspond au filetage de son corps, de telle sorte que lorsque le corps est vissé dans la douille, l'ensemble ainsi constitué est de forme cylindrique circulaire.

5. Dispositif de marquage selon l'une des revendications 1 à 4, **caractérisée en ce que** les moyens permettant l'entraînement en rotation de la tête (8) sont une rainure (16) droite passant par le centre de la face (14) orientée vers l'intérieur du moule.

## Patentansprüche

1. Markierungsvorrichtung für eine Gussform, die umfasst:
- einen kreisförmigen Kopf (8), der vorgesehen ist, in einer Aufnahme (22) angeordnet zu werden, die in einer Gussformwand vorgesehen ist und einen Durchmesser aufweist, der im Wesentlichen gleich dem Durchmesser des Kopfes (8) ist, und mit der Innenseite der Wand der Gussform (6) bündig abzuschließen, wobei die Seite (14) des Kopfes, die zum Inneren der Gussform hin gerichtet ist, Mittel (16) aufweist, die einen Drehantrieb des Kopfes erlauben, und
- einen gewindeten, zylindrischen Schaft (10), der einstückig mit dem Kopf (8) der Vorrichtung ist,
**dadurch gekennzeichnet, dass** die zum Inneren der Gussform gerichtete Seite (14) des Kopfes eine andere Markierung als die Antriebsmittel (16) aufweist.

2. Markierungsvorrichtung nach Anspruch 1, **dadurch gekennzeichnet, dass** der Kopf (8) eine kreisrunde, zylindrische Form mit einem Außendurchmesser hat, der über dem Außendurchmesser des Schaftes (10) liegt.

3. Markierungsvorrichtung nach Anspruch 2, **dadurch gekennzeichnet, dass** ein kegelstumpfförmiger Bereich (12) den Kopf (8) der Vorrichtung mit ihrem Schaft (10) verbindet.

4. Markierungsvorrichtung nach einem der Ansprüche 2 oder 3, **dadurch gekennzeichnet, dass** sie femer eine gewindete Hülse (2) umfasst, deren Außendurchmesser dem Außendurchmesser des Kopfes (8) der Vorrichtung entspricht und deren Innengewinde dem Außengewinde seines Schaftes entspricht, sodass, wenn der Schaft in die Hülse geschraubt wird, die so entstandene Einheit eine kreisrunde, zylindrische Form hat.

5. Markierungsvorrichtung nach einem der Ansprüche 1 bis 4, **dadurch gekennzeichnet, dass** die Mittel, die den Drehantrieb des Kopfes (8) erlauben, in einer geraden Rille (16) bestehen, die durch die Mitte der zum Inneren der Gussform weisenden Seite (14) führt.

## Claims

1. Marking device for a mould comprising:
- a circular head (8), designed to be located in a housing (22) provided in a wall of the mould and having a diameter substantially equal to the diameter of the head (8) and designed to be flush with the inner face of the wall of the mould (6), the face (14) of the head directed towards the interior of the mould having means (16) for enabling the head to be driven in rotation, and
- a threaded cylindrical body (10) forming only one piece with the head (8) of the device,
**characterized in that** the face (14) of the head directed towards the interior of the mould has marking distinct from the drive means (16).

2. Marking device according to claim 1, **characterized in that** the head (8) has a circular cylindrical shape, with an external diameter greater than the external diameter of the body (10).

3. Marking device according to claim 2, **characterized in that** a part with a frustoconical form (12) connects the head (8) of the device to its body (10).

4. Marking device according to one of claims 2 or 3, **characterized in that** it additionally includes a tapped bush (2) of which the external diameter corresponds to the external diameter of the head (8) of the device and of which the tapping corresponds to the thread of its body, so that when the body is screwed into the bush, the assembly formed in this way has a circular cylindrical shape.

5. Marking device according to one of claims 1 to 4, **characterized in that** the means for driving the head (8) in rotation is a straight groove (16) passing through the centre of the face (14) directed towards the interior of the mould.
